# EUROPÄISCHE PATENTANMELDUNG

(11) **EP 0 917 387 A2**
(43) Veröffentlichungstag der Anmeldung: **19.05.1999**
(21) Anmeldenummer: 98118932.7
(22) Anmeldetag: 07.10.1998
(51) Int. Cl.: H04Q 11/04

(54) **Verfahren zum Betreiben eines Telefonendgerätes in einem ISDN-Telefonsystem und Telefonendgerät**

(30) Priorität: 11.11.1997 DE 19749863
(71) Anmelder: SIEMENS AKTIENGESELLSCHAFT, 80333 München (DE)
(72) Erfinder: Pucher, Werner, 1100 Wien (AT)

(57) **Zusammenfassung**

Ein Verfahren zum Betreiben eines Telefonendgerätes in einem ISDN-Telefonsystem, bei welchem während einer bereits auf einem ersten B-Kanal bestehenden Verbindung ein weiterer einlangender Ruf über einen zweiten B-Kanal durchgeschaltet wird und über diesen zweiten B-Kanal eine Ansage gesendet wird, wobei nach Abbau der Verbindung auf dem ersten B-Kanal die Verbindung auf dem zweiten B-Kanal zum Gespräch freigegeben wird, sowie ein Telefonendgerät mit dessen interner Schnittstelle (INT) eine Ansageeinheit (ASE) in Verbindung steht und ein Mikroprozessor (MIP) dazu eingerichtet ist, während einer bereits auf einem ersten B-Kanal bestehenden Verbindung einen weiteren einlangenden Ruf über einen zweiten B-Kanal durchzuschalten, auf die Ansageeinheit zu legen und die Ansageeinheit zur Abgabe einer Ansage zu aktivieren.

## Beschreibung

Die Erfindung bezieht sich weiters auf ein Telefonendgerät, welches an einen S₀-Anschluß eines ISDN-Telefonsystems anschließbar ist, mit einem S₀-Interface, mit einer Teilnehmer-Zugangssteuerung, mit einem Digital/Analog-Audioprozessor sowie mit einer internen Schnittstelle, an welche die Zugangssteuerung und der Audioprozessor sowie mit einer internen Schnittstelle, an welche die Zugangssteuerung und der Audioprozessor angeschlossen sind und in welcher beide B-Kanäle getrennt geführt sind, wobei zur Steuerung der Funktionen zumindest ein Mikroprozessor vorgesehen ist.

Die Kanalstruktur des ISDN-Kommunikationssystems (Integrated Services Digital Network) weist zwei Nutzkanäle, B-Kanäle genannt, mit je 64 kbps sowie einen Steuerkanal, D-Kanal genannt, mit 16 kbps auf. Die B-Kanäle dienen zur Übertragung von Nutzinformationen, nämlich Daten, Sprache oder 3,1 kHz Audio, wogegen der D-Kanal Steuerinformationen überträgt. An einem Basisanschluß, S₀-Schnittstelle genannt, können bis zu acht Endgeräte angeschlossen sein, über jeden B-Kanal kann eine Verbindung bestehen, somit je Basisanschluß zwei Verbindungen gleichzeitig. Das ISDN-System definiert drei Protokollagen (Layers) wobei die Schicht 3 der Verbindungssteuerung (Verbindungsauf- und -abbau mittels Rufidentifizierung und Kennung des Übermittlungsdienstes, Steuerung von Zusatzdiensten), die Lage 2 der Terminaladressierung, Übertragungssicherung, etc. und die Lage 1 der physikalischen Übertragung aller Informationen im B-/D-Kanal über die Teilnehmeranschlußleitungen dienen.

Grundlegendes zum ISDN-System und dessen S₀-Schnittstelle ist beispielsweise dem Buch "Digitale Kommunikationsnetze" von Peter R. Gerke, Springer Verlag, ISBN 0-540-52330-8, zu entnehmen.

Obwohl somit zwei Gespräche gleichzeitig über einen Basisanschluß geführt werden können, ist dies in vielen Fällen nicht möglich bzw. wünschenswert. Falls nur ein einziges Telefongerät installiert ist, kann ein bei bestehender Verbindung einlangender zweiter Anruf allenfalls über die Anklopffunktion und durch Makeln vorübergehend übernommen werden. Dies setzt natürlich voraus, daß diese Funktionen aktiviert sind, ist aber auf jeden Fall unangenehm für jenen Teilnehmer, dessen Gespräch vorübergehend unterbrochen wird. Eine andere Möglichkeit läge in der Verwendung eines Anrufbeantworters, wodurch jedoch besonders deutlich der Eindruck erweckt wird, daß der gerufene Teilnehmer nicht anwesend ist, was insbesondere im Geschäftsleben psychologisch ungünstig ist, da sich ein Anrufer abgewiesen vorkommt.

Einige Netzbetreiber bieten zwar das Leistungsmerkmal "Queuing" an, das in der Vermittlungsstelle realisiert wird und durch welches ein oder mehrere rufende(r) Teilnehmer auf eine Warteschlange bzw. Ansage geschaltet werden können, doch ist dieses Leistungsmerkmal nicht überall verfügbar, falls doch, ist es meist mit zusätzlichen Gebühren verbunden.

Es ist eine Aufgabe der Erfindung, eine diesen Nachteilen begegnende, kostengünstige Lösung zu finden.

Diese Aufgabe wird mit einem Verfahren der eingangs genannten Art gelöst, bei welchem erfindungsgemäß während einer bereits auf einem ersten B-Kanal bestehenden Verbindung ein weiterer einlangender Ruf über einen zweiten B-Kanal durchgeschaltet wird und über diesen zweiten B-Kanal eine Ansage gesendet wird, wobei nach Abbau der Verbindung auf dem ersten B-Kanal die Verbindung auf dem zweiten B-Kanal zum Gespräch freigegeben wird.

Der Vorteil dieses Verfahrens liegt darin, daß es von der ISDN-Signalisierung voll unterstützt wird und daß es unabhängig von bei der Vermittlungsstelle liegenden Leistungsmerkmalen und Zusatzdiensten ist. Da der Ansagetext frei vorgebbar ist, kann der wartende Teilnehmer einen der gegebenen Situation z.B. der Art eines Betriebes angepaßten Text hören.

Um ein Abheben an einem zweiten Telefongerät zu ermöglichen, kann es zweckmäßig sein, falls der weitere einlangende Ruf erst nach Ablauf einer vorgebbaren Verzögerungszeit zum Senden der Ansage durchgeschaltet wird.

Die gestellte Aufgabe wird auch mit einem Telefongerät der oben angegebenen Art gelöst, bei welchem erfindungsgemäß mit der internen Schnittstelle eine Ansageeinheit in Verbindung steht und der Mikroprozessor dazu eingerichtet ist, während einer bereits auf einem ersten B-Kanal bestehenden Verbindung einen weiteren einlangenden Ruf über einen zweiten B-Kanal durchzuschalten, auf die Ansageeinheit zu legen und die Ansageeinheit zur Abgabe einer Ansage zu aktivieren.

Die mit einem solchen Telefongerät erzielbaren Vorteile wurden bereits im Zusammenhang mit dem Verfahren genannt.

Bei einer zweckmäßigen Variante ist vorgesehen, daß der Mikroprozessor dazu eingerichtet ist, nach Abbau der Verbindung auf dem ersten B-Kanal eine auf dem zweiten B-Kanal zur Ansageeinheit aufgebaute Verbindung auf den Audioprozessor umzuschalten.

Weiters kann es aus dem bereits genannten Grund zweckmäßig sein, wenn der Mikroprozessor dazu eingerichtet ist, den weiteren einlangenden Ruf erst nach Ablauf einer vorgebbaren Verzögerungszeit auf die Ansageeinheit zu legen.

Zur Erzielung einer kompakten Bauart ist die Ansageeinheit bei einer Variante vorteilhafterweise als in dem Endgerät angeordnetes Modul ausgebildet.

Andererseits kann es in Hinblick auf flexible Lösungen auch zweckmäßig sein, falls die Ansageeinheit von einem externen Ansagegerät und einem Terminal Adapter Modul gebildet ist, wobei dieses Modul eine Terminal Adapter Schaltung enthält, die einerseits an die interne Schnittstelle und andererseits an das Ansagegerät angeschlossen ist und zur Steuerung der Ansagefunktion ein Mikroprozessor des Moduls vorgesehen ist, wobei der zweite B-Kanal über die Terminal Adapter Schaltung zu dem Ansagegerät durchschaltbar ist.

Wieder eine andere ratsame Modifikation ist dadurch gekennzeichnet, daß eine Terminal Adapter Schaltung vorgesehen ist, die mit der internen Schnittstelle und einem Systembus in Verbindung steht und die als Terminal Adapter mit einem an den Bus des Personalcomputers anschließbaren Busumsetzer verbunden ist, wobei an den Systembus auch die Teilnehmer Zugangssteuerung, der Mikroprozessor sowie ein Dual Port Memory liegen, der zweite B-Kanal über die Terminal Adapter Schaltung, den Systembus und das Dual Port Memory zu dem Personal Computer durchschaltbar ist, in welchem die Ansageeinheit in Form von Ansagedateien realisiert ist.

Die Erfindung samt weiteren Vorteilen ist im folgenden an Hand beispielsweiser Ausführungsformen näher erläutert, die in der Zeichnung veranschaulicht sind. In dieser zeigen
Fig.1 ein Blockschaltbild eines Telefonendgerätes nach der Erfindung in einer ersten Ausführungsform,
Fig.2 wie Fig.1 eine zweite Ausführungsform,
Fig.3 wie Fig.1 und 2 eine dritte Ausführungsform und
Fig.4 einen beispielsweisen Signalisierungsablauf bei der Erfindung.

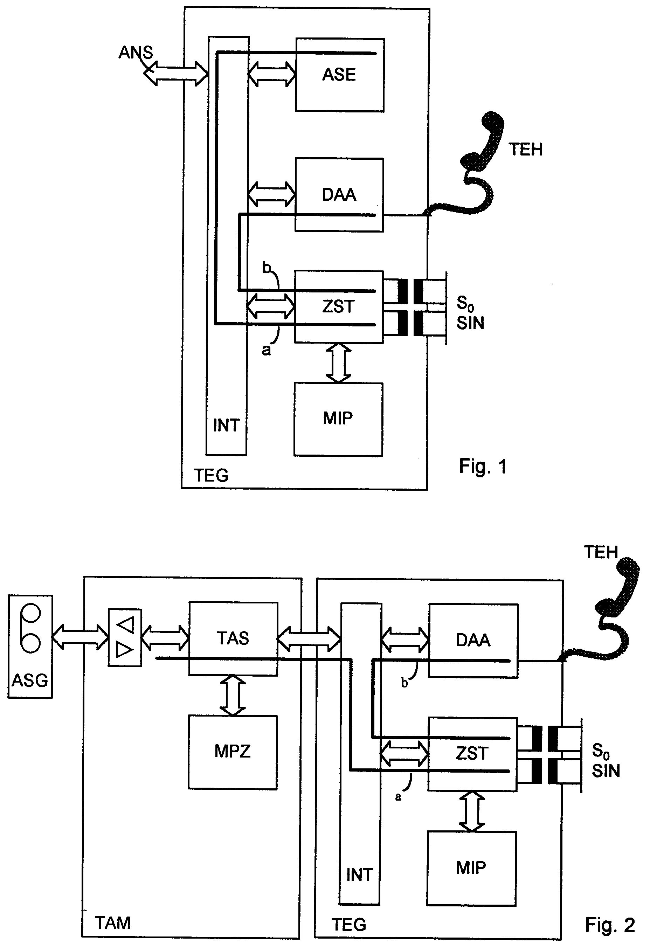

Fig. 1 geht von einem herkömmlichen Telefongerät TEG aus, welches an eine S₀-Schnittstelle SIN eines ISDN-Netzes angeschlossen ist. Dieses Gerät enthält eine Teilnehmer-Zugangssteuerung, die mit einer internen Schnittstelle INT in Verbindung steht, wobei die beiden B-Kanäle, hier mit a, b bezeichnet, in der internen Schnittstelle bereits getrennt verlaufen. Das Gerät enthält weiters einen Digital/Analog-Audioprozessor DAA, an den hier ein Telefonhörer TEH angeschlossen ist, eine Ansageeinheit ASE und einen Mikroprozessor MIP zur Steuerung sämtlicher Funktionen des Gerätes. Mit ANS ist ein Anschluß für Zusatzgeräte (Terminal Adapter) bezeichnet.

Der das Gerät steuernde Mikroprozessor MIP beinhaltet ein Programm für sämtliche Telefonfunktionen und er verarbeitet außerdem die Signalisierung gemäß dem entsprechenden ISDN-Protokoll (LAP-D Protokoll). Der einzige Unterschied zu einem herkömmlichen Telefongerät besteht somit darin, daß die als Modul ausgebildete Ansageeinheit ASE in dem Telefongerät enthalten und an die interne Schnittstelle angeschlossen ist. Soferne während eines Gespräches des Teilnehmers mit einem ersten fernen Teilnehmer der Sprachkanal b durchgeschaltet ist und sodann ein zweites Gespräch eines fernen Teilnehmers einlangt, wird dieses über den zweiten B-Kanal a durchgeschaltet und mit der Ansageeinheit ASE verbunden, wobei nun über diesen eine Ansage gesendet wird. Dieses Durchschalten erfolgt jedoch mit einer vorgebbaren Verzögerungszeit, damit gegebenenfalls die Möglichkeit besteht, das Gespräch an einem anderen Telefongerät zu übernehmen.

Nach Abbau der Verbindung auf dem ersten Kanal b wird die Verbindung des zweiten Sprechkanals a freigegeben, d.h. auf den Digital/Analog-Audioprozessor DAA gelegt.

Aus dem oben stehenden erkennt man, daß das Programm des Mikroprozessors MIP dahingehend erweitert werden muß, daß beim Belegen des zweiten B-Kanals die Kopplung zeitgesteuert über die interne Schnittstelle zu der Ansageeinheit ASE erfolgen muß, bei erfolgreichem Durchschalten mittels der Signalisierung CONNECT auf dem D-Kanal die Verbindung der Ansageeinheit mitgeteilt werden muß und nach Freiwerden des ersten B-Kanals der zweite B-Kanal zum Audioprozessor DAA durchgeschaltet werden muß. Bevor die Ansage nach einer Zeitverzögerung auf den zweiten B-Kanal gelegt werden darf, muß der Mikroprozessor MIP die Übernahme der Verbindung durch Senden der Nachricht CONNECT einleiten. Erst bei Erhalt der Nachricht CONNECT ACKNOWLEDGE ist der zweite B-Kanal dem Endgerät zugeteilt. Die Kopplung zur Ansageeeinheit ASE darf erst nach dem Empfang der D-Kanalmeldung CONNECT ACKNOWLEDGE erfolgen. Der Mikroprozessor MIP muß überdies die vollständige Steuerung für die Ansageeinheit enthalten. Wie diese Ansageeinheit aufgebaut ist, ist nicht Gegenstand der Erfindung. Sie kann beispielsweise als Speichermedium eine Magnetbandkassette oder ebensogut eine Speicherchip enthalten.

Die Ausführung nach Fig.2 unterscheidet sich von jener nach Fig.1 dadurch, daß die Ansageeinheit nicht in den eigentlichen Telefongerät enthalten ist, sondern daß ein externes Ansagegerät ASG vorgesehen ist, das zusammen mit einem Terminal Adapter Modul TAM die Ansageeinheit bildet. Das Modul TAM enthält eine Terminal Adapter Schaltung TAS, die einerseits an die interne Schnittstelle INT des Telefongerätes TEG angeschlossen ist und andererseits an das Ansagegerät ASG. Zur Steuerung der Ansagefunktion ist ein Mikroprozessor MPZ des Moduls TAM vorgesehen und der zweite B-Kanal wird über die Terminal Adapter Schaltung TAS zu dem Ansagegerät ASG durchgeschaltet.

Bei dieser Ausführungsform ist ein Mikroprozessor MIP im Telefongerät TEG sowie ein Mikroprozessor MPZ im Modul TAM enthalten. Der Mikroprozessor MIP des Telefongerätes TEG beinhaltet das Programm für sämtliche Telefonfunktionen und er verarbeitet auch die Signalisierung gemäß dem LAP-D Protokoll, wogegen der Mikroprozessor an dem Terminal Adapter Modul TAM die Terminal Adapter Schaltung TAS steuert. Dabei muß am Telefongerät TEG das Programm des Mikroprozessors MIP dahingehend erweitert werden, daß beim Belegen des zweiten B-Kanals die Kopplung zeitgesteuert über die interne Schnittstelle INT zu dem Modul TAM erfolgt und nach Freiwerden des ersten B-Kanals der zweite B-Kanal zum Audioprozessor DAA durchgeschaltet wird. Bevor die Ansage nach einer Zeitverzögerung auf den zweiten B-Kanal gelegt werden darf, muß der Mikroprozessor MIP die Übernahme der Verbindung durch Senden der Nachricht CONNECT einleiten. Erst bei Erhalt der Nachricht CONNECT ACKNOWLEDGE ist der zweite B-Kanal dem Endgerät zugeteilt. Der Mikroprozessor MIP benachrichtigt das Modul TAM über die Kanalzuteilung, worauf der Mikroprozessor MPZ die Ansagedaten über die Terminal Adapter Schaltung sendet.

Dem Mikroprozessor MPZ des Moduls TAM kommt als Aufgabe folgendes zu: im Falle einer Kopplung zum zweiten B-Kanal muß die Terminal Adapter Schaltung TAS die Datenverbindung zum Ansagegerät ASG durchschalten bzw. bei einer Entkopplung wegschalten. Der Mikroprozessor MIP des Telefongerätes muß bei Erfolg benachrichtigt werden, damit dieser mittels der Signalisierung CONNECT am D-Kanal die Verbindung zum Modul TAM mitteilt und überdies muß der Mikroprozessor MPZ die vollständige Steuerung für das Ansagegerät ASG übernehmen.

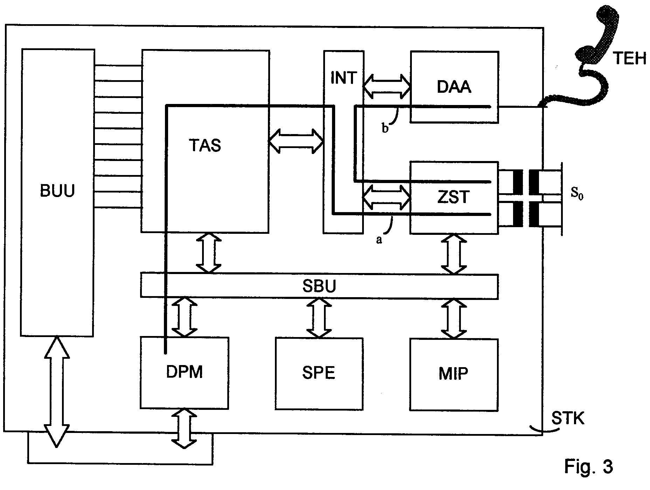

Bei der dritten Ausführungsform nach Fig.3 handelt es sich um die Erweiterung einer Steckkarte STK für den Einsatz in einem Personal Computer, bei welchem das Telefonendgerät mit Hilfe der Steckkarte und des Computers realisiert wird. Die in Fig.3 gezeigte Steckkarte STK weist neben der internen Schnittstelle INT, dem Digital/Analog-Audioprozessor DAA und der Teilnehmer-Zugangssteuerung ZST einen Systembus SBU auf, der mit einer Terminal Adapter Schaltung TAS ebenso in Verbindung steht, wie mit der Teilnehmer-Zugangssteuerung, einem Mikroprozessor MIP einer hier nicht näher interessierenden Speichereinheit SPE und einem Dual Port Memory DPM. Die Terminal Adapter Schaltung TAS arbeitet mit einem Busumsetzer BUU zusammen, welcher die seriellen Ports der Terminal Adapter Schaltung den beispielsweise 16 oder 32 Eingängen des Personal Computer Busses anpaßt Über das Dual Port Memory werden anwenderspezifische Programmdaten übertragen und die Programme des Personal Computers für das Telefon gesteuert.

Der Ablauf des Verfahrens ist auch im Prinzip hier ähnlich wie im Zusammenhang mit den Fig. 1 und 2 beschrieben. Dem Mikroprozessor MIP kommen im vorliegenden Fall die folgenden Aufgaben zu:

Bei Belegen des zweiten B-Kanals muß die Kopplung zeitgesteuert über die interne Schnittstelle INT zu der Terminal Adapter Schaltung TAS erfolgen, bei erfolgreichem Durchschalten muß mittels der Signalisierung CONNECT am D-Kanal die Verbindung zu der Ansageeinheit mitgeteilt werden, die im vorliegenden Fall in den Personal Computer als Datei (WAV-Datei) realisiert ist und die unterschiedliche Ansagetexte enthalten kann, nach Freiwerden des ersten B-Kanals muß der zweite B-Kanal zu dem Audio-Prozessor DAA durchgeschaltet werden, und im Falle einer Kopplung zum zweiten B-Kanal muß die Terminal Adapter Schaltung TAS die Datenverbindung zum Dual Port Memory TPM durchschalten bzw. bei einer Entkopplung wegschalten. Natürlich erfolgt auch hier das Durchschalten des zweiten Kanals erst nach Erhalt der CONNECT ACKNOWLEDGE Nachricht.

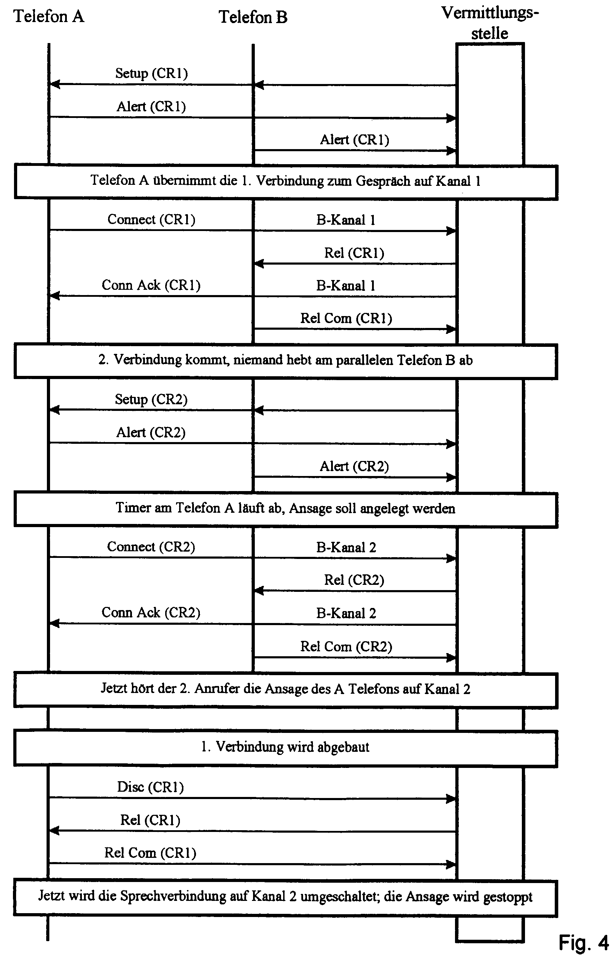

Der prinzipielle Meldungsfluß zwischen einer Vermittlungsstelle und dem in Betracht kommenden Teilnehmer, bei dem ein Telefon A und ein Telefon B vorhanden sei, läuft ab wie in Fig. 4 dargestellt. Dabei ist die Vermittlungsstelle mit VST bezeichnet, CR 1 bzw. CR 2 sind Abkürzungen für "Call Reference 1 bzw. 2", und die übrigen Bezeichnungen entsprechen dem ISDN-Protokoll. Im Gegensatz zu den Fig. 1 bis 3 sind die Sprechkanäle hier mit den Ziffern 1 und 2 bezeichnet, doch bedarf im übrigen die Fig. 4 keiner näheren Erläuterung, da sie für sich selbst spricht und dem Fachmann bekannte Ausdrücke enthält.

## Patentansprüche

1. Verfahren zum Betreiben eines Telefonendgerätes in einem ISDN-Telefonsystem
**dadurch gekennzeichnet,**
daß während einer bereits auf einem ersten B-Kanal bestehenden Verbindung ein weiterer einlangender Ruf über einen zweiten B-Kanal durchgeschaltet wird und über diesen zweiten B-Kanal eine Ansage gesendet wird, wobei nach Abbau der Verbindung auf dem ersten B-Kanal die Verbindung auf dem zweiten B-Kanal zum Gespräch freigegeben wird.

2. Verfahren nach Anspruch 1, **dadurch gekennzeichnet,** daß der weitere einlangende Ruf erst nach Ablauf einer vorgebbaren Verzögerungszeit zum Senden der Ansage durchgeschaltet wird.

3. Telefonendgerät, welches an einen S₀-Anschluß eines ISDN-Telefonsystems anschließbar ist, mit einem S₀-Interface (SIN), mit einer Teilnehmer-Zugangssteuerung (ZST), mit einem Digital/Analog-Audioprozessor (DAA) sowie mit einer internen Schnittstelle (INT), an welche die Zugangssteuerung und der Audioprozessor (DAA) sowie mit einer internen Schnittstelle (INT), an welche die Zugangssteuerung und der Audioprozessor angeschlossen sind und in welcher beide B-Kanäle getrennt geführt sind, wobei zur Steuerung der Funktionen zumindest ein Mikroprozessor (MIP) vorgesehen ist,
**dadurch gekennzeichnet,**
daß mit der internen Schnittstelle (INT) eine Ansageeinheit (ASE) in Verbindung steht und der Mikroprozessor (MIP) dazu eingerichtet ist,
während einer bereits auf einem ersten B-Kanal bestehenden Verbindung einen weiteren einlangenden Ruf über einen zweiten B-Kanal durchzuschalten, auf die Ansageeinheit zu legen und die Ansageeinheit zur Abgabe einer Ansage zu aktivieren.

4. Telefonendgerät nach Anspruch 3, **dadurch gekennzeichnet,** daß der Mikroprozessor (MIP) dazu eingerichtet ist, nach Abbau der Verbindung auf dem ersten B-Kanal eine auf dem zweiten B-Kanal zur Ansageeinheit (ASE) aufgebaute Verbindung auf den Audioprozessor (DAA) umzuschalten.

5. Telefonendgerät nach Anspruch 3 oder 4, **dadurch gekennzeichnet,** daß der Mikroprozessor (MIP) dazu eingerichtet ist, den weiteren einlangenden Ruf erst nach Ablauf einer vorgebbaren Verzögerungszeit auf die Ansageeinheit (ASE) zu legen.

6. Telefonendgerät nach einem der Ansprüche 3 bis 5, **da durch gekennzeichnet,** daß die Ansageeinheit (ASE) als in dem Endgerät angeordnetes Modul ausgebildet ist.

7. Telefonendgerät nach einem der Ansprüche 3 bis 5, **dadurch gekennzeichnet,** daß die Ansageeinheit (ASE) von einem externen Ansagegerät (ASG) und einem Terminal Adapter Modul (TAM) gebildet ist, wobei dieses Modul eine Terminal Adapter Schaltung (TAS) enthält, die einerseits an die interne Schnittstelle (INT) und andererseits an das Ansagegerät (ASG) angeschlossen ist und zur Steuerung der Ansagefunktion ein Mikroprozessor (MPZ) des Moduls vorgesehen ist, wobei der zweite B-Kanal über die Terminal Adapter Schaltung zu dem Ansagegerät durchschaltbar ist.

8. Telefonendgerät nach einem der Ansprüche 3 bis 5, zum Anschluß an einen Personal Computer, **dadurch gekennzeichnet,** daß eine Terminal Adapter Schaltung (TAS) vorgesehen ist, die mit der internen Schnittstelle (INT) und einem Systembus (SBU) in Verbindung steht und die als Terminal Adapter mit einem an den Bus des Personalcomputers anschließbaren Busumsetzer (BUU) verbunden ist, wobei an den Systembus (SBU) auch die Teilnehmer Zugangssteuerung (ZST), der Mikroprozessor (MIP) sowie ein Dual Port Memory (DPM) liegen, der zweite B-Kanal über die Terminal Adapter Schaltung (TAS), den Systembus (SBU) und das Dual Port Memory zu dem Personal Computer durchschaltbar ist, in welchem die Ansageeinheit in Form von Ansagedateien (WAV) realisiert ist.
